# EUROPÄISCHE PATENTSCHRIFT

(11) **EP 2 913 277 B1**
(45) Veröffentlichungstag und Bekanntmachung des Hinweises auf die Patenterteilung: **09.08.2017**
(21) Anmeldenummer: 15155528.1
(22) Anmeldetag: 18.02.2015
(51) Int. Cl.: B65D 19/00, B65D 88/14

(54) **Bodenelement für einen Frachtcontainer und/oder eine Frachtpalette sowie Verfahren zur Herstellung eines entsprechenden Bodenelements**
Floor element for a cargo container and/or a cargo pallet and method for producing a corresponding base element
Élément de sol pour un conteneur de fret et/ou une palette de fret et procédé de fabrication d'un élément de sol correspondant

(30) Priorität: 28.02.2014 DE 102014102670; 12.03.2014 DE 102014103317
(43) Veröffentlichungstag der Anmeldung: 02.09.2015
(73) Patentinhaber: Telair International GmbH, 83714 Miesbach (DE)
(72) Erfinder: Huber, Thomas, 83727 Schliersee (DE)
(74) Vertreter: Bohnenberger, Johannes

(56) Entgegenhaltungen:
- EP-A2- 2 384 974
- WO-A1-2006/080857
- WO-A2-2012/012367
- JP-A- 2007 241 781
- JP-A- 2013 214 211
- KR-B1- 101 207 673

## Beschreibung

Die Erfindung betrifft ein Bodenelement für einen Frachtcontainer und/oder eine Frachtpalette sowie ein entsprechendes Verfahren.

Frachtgut wird in hoher Stückzahl in Containern, auf Paletten oder dergleichen ULDs (Unit-Load-Devices) in zunehmendem Maße im Flugzeug transportiert. Hierbei kommt es darauf an, dass der Belade- und der Entladevorgang schnell und sicher vor sich gehen. Das Frachtgut muss im Laderaum des Flugzeugs korrekt verstaut werden, so dass auch bei einem unruhigen Flug keine Beschädigung auftritt. Probleme liegen also einerseits im Bereich der Logistik, als auch des Planens und Nachvollziehens der Transportwege und -zeiten, andererseits im Bereich der Be- und Entladevorgänge selbst.

Es ist bekannt (EP 2 384 974 B1), Frachtcontainer mit RFID-Transpondern bzw. RFID-Tags auszustatten, um diese beim Be- und Entladen zu identifizieren. Des Weiteren gibt es Ansätze, die RFID-Transponder an Frachtcontainern zu nutzen, um Positionsangaben der Frachtcontainer auch mit entsprechenden RFID-Leseeinrichtungen bzw. RFID-Readern ausgestatteten Frachtdecks vorzunehmen.

In der Praxis gestaltet sich das sichere Auslesen von entsprechenden RFID-Transpondern an Frachtcontainern und/oder Frachtpaletten als äußerst problematisch. So befinden sich in einem Frachtladeraum eines Flugzeugs zahlreiche Frachtcontainer und/oder Paletten, die alle mit entsprechenden RFID-Transpondern ausgestattet sein können. Insbesondere bei der Verwendung von aktiven RFID-Transpondern ist es daher schwierig, die Signale voneinander zu trennen. Des Weiteren ist die Umgebung, in der die Frachtcontainer und/oder Frachtpaletten mit entsprechend ausgestatteten RFID-Transpondern eingesetzt wird, äußerst rau, so dass diese vor Regen, Stößen, Temperaturschwankungen usw. geschützt werden müssen. Als besonderes Problem hat es sich jedoch herausgestellt, dass sowohl die Frachtcontainer und/oder Frachtpaletten selbst zahlreiche Bauteile aus Metall und Metalllegierungen umfassen. Des Weiteren ist das Frachtdeck mit zahlreichen metallischen Gegenständen versehen. Die eingesetzten RFID-Transponder und RFID-Leseeinrichtungen befinden sich also in unmittelbarem Kontakt mit metallischen Werkstoffen, so dass diese deren Kommunikation erschweren.

Die WO 2006/080857 A1 beschreibt eine Kunststoffpalette, bei der ein Oberteil mit einem Unterteil über eine Befestigungseinrichtung miteinander verbunden ist. Die Befestigungseinrichtung sind im Endeffekt zwei pilzförmige Objekte, die miteinander verschraubt sind. Die pilzförmigen Objekte haben einen Hohlraum, der dazu geeignet ist, einen RFID-Tag aufzunehmen.

Die KR 101 207 673 B1 beschreibt einen quaderförmigen Kunststoffkörper mit Seitenrasten, der einen RFID-Tag aufnehmen kann. Der quaderförmige Kunststoff lässt sich von unten in eine Kunststoffpalette einrasten.

Die JP 2007 241 781 A beschreibt ein Gehäuse zur Aufnahme eines RFID-Tags. Das Gehäuse ist zylinderförmig ausgebildet und hat ein Außengewinde. Das Außengewinde eignet sich dazu, das Gehäuse innerhalb einer Gewindemutter oder einem beliebigen anderen Objekt mit einem entsprechenden Innengewinde anzubringen.

Ausgehend von diesem Stand der Technik, insbesondere von der EP 2 384 974 B1, ist es Aufgabe der vorliegenden Erfindung, ein Bodenelement für einen Frachtcontainer und/oder eine Frachtpalette bereitzustellen, das einen RFID-Transponder so beherbergt, dass ein entsprechendes Signal sicher und effizient erfasst werden kann. Des Weiteren soll ein entsprechendes Verfahren zur Herstellung eines Frachtcontainers oder einer Frachtpalette mit einem Bodenelement angegeben werden.

Die Aufgabe wird erfindungsgemäß durch den Gegenstand des Anspruchs 1 sowie durch das Verfahren des Anspruchs 12 gelöst. Ein wesentlicher Aspekt der vorliegenden Erfindung besteht darin, dass der oder die RFID-Transponder im Bodenelement, also relativ nahe zum Frachtdeck, angeordnet sind. Erfindungsgemäß wird der RFID-Transponder in einer Transponder-Halteeinrichtung gekapselt, die diesen vor schädlichen Einflüssen schützt. Die Transponder-Halteeinrichtung ist in einer Bohrung am Bodenelement verankert, so dass Stöße von außen nicht direkt auf die Transponder-Halteeinrichtung, sondern zunächst auf die Rahmenkonstruktion des Bodenelements wirken. Die Bohrung mit der verankerten Transponder-Halteeinrichtung ist vorzugsweise nach unten hin geöffnet, so dass ein Auslesen des RFID-Transponders von unten her, beispielsweise von einer Leseeinrichtung, die im Frachtdeck (horizontal) installiert ist, vorgenommen werden kann.

In einer Ausführungsform ist die Transponder-Halteeinrichtung zumindest teilweise aus Kunststoff, so dass sich bei einem Auslesen des RFID-Transponders von unten her kaum metallische Werkstoffe zwischen der Leseeinrichtung und dem RFID-Transponder befinden. Eine sichere Kommunikation zwischen dem RFID-Transponder und der zugehörigen Leseeinrichtung wird somit sichergestellt. Des Weiteren kann durch diese Ausgestaltung des Bodenelements auf aktive RFID-Transponder verzichtet werden. Passive RFID-Transponder zeichnen sich besonders dadurch aus, dass sie über eine sehr lange Lebensdauer keine Wartung benötigen. Der Einsatz von passiven RFID-Transpondern hat des Weiteren den Vorteil, dass diese eine nur sehr geringe Reichweite haben. Der Empfang der notwendigen Daten wird also nicht durch weitere RFID-Transponder beispielsweise von anderen Frachtcontainern und/oder Frachtpaletten und/oder Frachtgut gestört. Das Befestigen der Transponder-Halteeinrichtung in der Bohrung ermöglicht es des Weiteren, bei Ausfällen den RFID-Transponder oder die Transponder-Halteeinrichtung in Verbindung mit dem RFID-Transponder auszutauschen. Erfindungsgemäß kann somit auch die Kennzeichnung eines bestimmten Frachtcontainers und/oder einer bestimmten Frachtpalette geändert werden, ohne dass ein erheblicher Aufwand betrieben werden muss.

Die Transponder-Halteeinrichtung umfasst eine Halteeinrichtung-Bodenplatte zur Halterung des RFID-Transponders aus Kunststoff. Vorzugsweise ist also zumindest die Bodenplatte der Transponder-Halteeinrichtung als Kunststoffbauteil ausgeführt, so dass die Kommunikation zur Leseeinrichtung nicht gestört ist.

Die Halteeinrichtung-Bodenplatte kann eine vieleckige Grundform und/oder Rasten zur formschlüssigen Halterung der Halteeinrichtung-Bodenplatte oder der Transponder-Halteeinrichtung in der Bohrung umfassen. Aufgrund der viereckigen Grundform und/oder der Rasten kann eine vorgegebene Ausrichtung der Halteeinrichtung-Bodenplatte gewährleistet werden. Dies führt zu einer vorgegebenen Ausrichtung des RFID-Transponders, der vorzugsweise an der Halteeinrichtung-Bodenplatte befestigt ist. Insofern kann eine RFID-Transponderausrichtung gewählt werden, die ein besonders gutes Erfassen des jeweiligen RFID-Transponders ermöglicht. Des Weiteren kann eine Ausrichtung gewählt werden, die die Positionsbestimmung des Frachtcontainers und/oder der Frachtpalette mittels RFID-Transponder erleichtert.

Die vieleckige Grundform und/oder die Ausgestaltung der Rasten kann so gewählt werden, dass eine Halteeinrichtung-Bodenplatte in einer Vielzahl von Positionen festsetzbar ist. Beispielsweise kann durch die Ausgestaltung der Halteeinrichtung-Bodenplatte in achteckiger Form diese in acht sich unterscheidenden Ausrichtungen innerhalb einer Ebene parallel zur Bodenunterseite festgesetzt werden. Zur Einnahme der einzelnen Positionen kann die Halteeinrichtung-Bodenplatte jeweils um ca. 45 Grad verdreht werden. Es ist also möglich, den RFID-Transponder in einer 0 Grad-, einer 45 Grad-, einer 90 Grad-, einer 135 Grad-, einer 180 Grad-, einer 225 Grad-, einer 270 Grad- und einer 315 Grad-Position festzusetzen. Erfindungsgemäß können andere Grundformen - nicht achteckig -, beispielsweise Viereck, Sechseck, aber auch die eines Ovals, gewählt werden.

In einem Ausführungsbeispiel ist der RFID-Transponder in der Transponder-Halteeinrichtung derart eingesetzt, dass dieser eine Ausrichtung einnimmt, die für das Lesen mittels einer Leseantenne, die im Wesentlichen parallel zur Bodenunterseite des Bodenelements verläuft, optimiert ist. Je nach gewähltem RFID-Transponder kann dies bedeuten, dass die Antenne des RFID-Transponders in einer Ebene liegt, die parallel zur Bodenunterseite des Bodenelements verläuft. Somit kann das Bodenelement für ein Auslesen von unten her optimiert werden. Die Leseantennen können relativ großflächig in das Frachtdeck, insbesondere im Einfahrtsbereich des Frachtraums des Flugzeugs vorgesehen werden.

Die mindestens eine Bohrung umfasst ein Gewinde, in das die Transponder-Halteeinrichtung, vorzugsweise von oben, eingeschraubt ist. Bei der Befestigung der Transponder-Halteeinrichtung ist aufgrund der Wartungs- und Austauschmöglichkeiten eine reversible Verbindung zwischen der Bohrung und der Transponder-Halteeinrichtung zu bevorzugen. Ein Gewinde lässt sich so an der Transponder-Halteeinrichtung sowie innerhalb der Bohrung einfach fertigen und erfüllt diese Anforderung. Aufgrund der zumindest zweiteiligen Ausgestaltung der Transponder-Halteeinrichtung vorzugsweise mit der vieleckigen Grundform, kann trotz der Verwendung eines Gewindes, eine vorgegebene Ausrichtung des RFID-Transponders gewährleistet werden. Die Bohrung ist bevorzugt so angeordnet und ausgebildet, dass sich die Transponder-Halteeinrichtung von oben - also von der Bodenoberseite - in die Bohrung einschrauben lässt.

Wartungsarbeiten können also vor Ort, möglicherweise sogar innerhalb des Flugzeugs, vorgenommen werden.

In einer Ausführungsform umfasst ein Bodenelement eine Vielzahl von Bohrungen, in die jeweils eine Transponder-Halteeinrichtung mit jeweils mindestens einem RFID-Transponder eingesetzt ist. Hierbei kann es sich um mindestens 2, insbesondere mindestens 3, insbesondere mindestens 4 Bohrungen handeln. In einer bevorzugten Ausführungsform sind die Bohrungen an den Ecken des Bodenelements vorgesehen. Das Vorsehen der Bohrungen an den Ecken hat zur Folge, dass die Transponder eines Bodenelements möglichst weit voneinander beabstandet sind, so dass keine Interferenzen entstehen können. Des Weiteren ermöglicht es die Anbringung der RFID-Transponder an den Ecken, markante Punkte des jeweiligen Bodenelements zu erfassen. Insofern ist die elektronische Bestimmung der Position und/oder Ausrichtung des Bodenelements möglich.

Anmeldungsgemäß spannt die Bodenunterseite eine Bodenunterseitenebene bzw. eine Transportebene ("conveyor plane") auf. In einem Ausführungsbeispiel der Erfindung ist der RFID-Transponder und/oder die Transponder-Halteeinrichtung und/oder die Halteeinrichtung-Bodenplatte deutlich von dieser Bodenunterseitenebene entfernt. Dieser Abstand kann mindestens 1 mm, insbesondere mindestens 3 mm, insbesondere mindestens 5 mm betragen und hat den Vorteil, dass die Transponder-Halteeinrichtung, insbesondere dessen Bodenplatte, beim Transport des Bodenelements auf einem Frachtdeck keinen Stößen ausgesetzt ist. Dies ist besonders vorteilhaft, da für eine bessere Übertragung die entsprechenden Elemente weniger solide ausgeführt sein können. Die bereits genannte Kunststoffausführung ist möglich, ohne dass ein Verschleiß zu befürchten ist. Die entsprechende Beabstandung wird dadurch sichergestellt, dass ein Anschlag in oder an der Bohrung vorgesehen ist.

Der Anschlag ist so ausgebildet, dass der RFID-Transponder von der Bodenunterseitenebene weniger als 30 mm, insbesondere weniger als 25 mm, insbesondere weniger als 20 mm, insbesondere weniger als 15 mm, insbesondere weniger als 10 mm beabstandet ist. Dieser geringe Abstand stellt sicher, dass ein Auslesen des RFID-Transponders von unten her sicher gewährleistet werden kann.

Die mindestens eine Bohrung kann mindestens 1 cm von einem Außenrand des Bodenelements beabstandet sein. Erfindungsgemäß kann der entsprechende Abstand auch deutlich großzügiger, beispielsweise mit einem Abstand von mindestens 2 cm und/oder mindestens 3 cm, gewählt werden. Diese Beabstandung von dem Außenrand stellt sicher, dass die Bohrung und die darin angeordnete Transponder-Halteeinrichtung vor Stößen ausreichend geschützt sind. Des Weiteren wird durch diese Anordnung gewährleistet, dass der RFID-Transponder in seitlicher Richtung abgeschirmt ist. Insofern konzentrieren sich die Bereiche, von denen aus der entsprechende RFID-Transponder ausgelesen werden kann, unterhalb und oberhalb der Bohrung. Ein seitliches Auslesen ist nicht gegeben, so dass Interferenzen vermieden werden. Des Weiteren lässt sich die Position des RFID-Transponders auch mittels einer einzigen Empfangsantenne sehr genau bestimmen, wodurch größere Präzision bei der Gesamtpositionsbestimmung des Frachtcontainers und/oder der Frachtpalette erzielt werden kann.

Die Transponder-Halteeinrichtung ist, wie bereits erläutert, als Hohlkörper ausgeführt. Eine zumindest zweiteilige Ausführung hat Vorteile. Die Transponder-Halteeinrichtung kann also nach Art eines verschließbaren Gehäuses ausgeführt sein, in das sich der RFID-Transponder einsetzen lässt. Für das Einsetzen des RFID-Transponders ist vorzugsweise eine Fixiereinrichtung vorgesehen. Die Fixiereinrichtung kann eine einfache Aussparung in der Halteeinrichtung-Bodenplatte sein, in die der RFID-Transponder mehr oder weniger formschlüssig eingesetzt wird. Die zumindest zweiteilige Ausgestaltung des Hohlkörpers hat den weiteren Vorteil, dass die Halteeinrichtung-Bodenplatte getrennt von dem Rest der Transponder-Halteeinrichtung positioniert und ausgerichtet werden kann. Insofern können vorgegebene Positionen eingenommen werden.

Das Bodenelement kann mindestens eine Bodenplatte und mindestens einen Rahmen umfassen, wobei die mindestens eine Bohrung in einem Eckprofil des Rahmens vorgesehen ist. Vorzugsweise ist dieser Rahmen aus einer Metalllegierung ausgeführt. Die erfindungsgemäße Transponder-Halteeinrichtung lässt sich besonders vorteilhaft in Verbindung mit einem entsprechend ausgeführten Rahmen einsetzen. Die Bodenplatte kann zumindest teilweise als faserverstärkter Kunststoff ausgeführt sein.

Der Rahmen kann mindestens vier Hohlprofile und mindestens vier Ecken umfassen, wobei die Hohlprofile und die Eckprofile vorzugsweise über Steckverbindungen miteinander verbindbar sind.

Vorzugsweise kommuniziert der RFID-Transponder auf Langwellen-Frequenzen (LF) und/oder auf Kurzwellen-Frequenzen (HF/RF). Die RFID-Transponder sind also dazu ausgebildet, im Bereich zwischen 30 kHz bis 30 MHz zu senden und/oder zu empfangen. Bevorzugte Frequenzen liegen im Bereich von 3-30 MHz.

Eine weitere Lösung besteht in einem System umfassend die genannten Frachtcontainer und/oder Bodenpaletten sowie ein Frachtdeck, das über eine in den Frachtboden eingebaute RFID-Leseeinrichtung verfügt. In einer vorteilhaften Ausgestaltung des Systems ist die Leseantenne im Wesentlichen parallel zur Bodenunterseitenebene ausgerichtet. Die Leseantenne kann sich in Funktionseinheiten, beispielsweise Rollenantriebseinheiten und/oder Kugelmatten, des Frachtdecks befinden. Vorzugsweise ist mindestens eine Leseantenne nahe bei oder im Eingangsbereich des Frachtladeraums vorgesehen.

Die genannte Aufgabe wird des Weiteren durch ein Verfahren zur Herstellung eines Bodenelements für Frachtcontainer und/oder Frachtpaletten gelöst. Vorzugsweise handelt es sich hierbei um Bodenelemente, wie diese bereits beschrieben wurden. Das Verfahren umfasst die folgenden Schritte:
a) Befestigung eines RFID-Transponders an einer Halteeinrichtung-Bodenplatte einer Transponder-Halteeinrichtung;
b) Einlegen der Halteeinrichtung-Bodenplatte in eine Bohrung des Bodenelements;
c) Befestigen der Transponder-Halteeinrichtung mittels eines Gewindes.

Es ergeben sich ähnliche Vorteile, wie diese bereits in Verbindung mit dem Bodenelement beschrieben wurden. Insbesondere lässt sich erfindungsgemäß die Halteeinrichtung-Bodenplatte platzieren und ausrichten, wobei eine Befestigung dieser durch ein zeitlich späteres Einschrauben der Transponder-Halteeinrichtung bzw. der verbleibenden Bauteile, erfolgt.

Nachfolgend wird die Erfindung mittels mehrerer Ausführungsbeispiele beschrieben, die anhand von Abbildungen näher erläutert werden. Hierbei zeigen:
- Fig. 1: eine Frachtpalette mit einer Bodenplatte und einem Rahmen;
- Fig. 2: eine Detailansicht des Eckprofils des Rahmens aus Fig. 1;
- Fig. 3: einen Schnitt durch das Eckprofil aus Fig. 2 mit der erfindungsgemäßen Transponder-Halteeinrichtung;
- Fig. 4: einen schematischen Schnitt durch die Transponder-Halteeinrichtung aus Fig. 3;
- Fig. 5: den Schnitt gemäß Fig. 3 mit verschiedenen Distanz- und Durchmesserangaben;
- Fig. 6: einen mit den erfindungsgemäßen Transponder-Halteeinrichtungen ausgestatteten Frachtcontainer;
- Fig. 7: ein Eckprofil des Frachtcontainers gemäß Fig. 6; und
- Fig. 8: einen Schnitt durch eine alternative Ausführungsform des Eckprofils gemäß Fig. 7.

In der nachfolgenden Beschreibung werden für gleiche und gleich wirkende Teile dieselben Bezugsziffern verwendet.

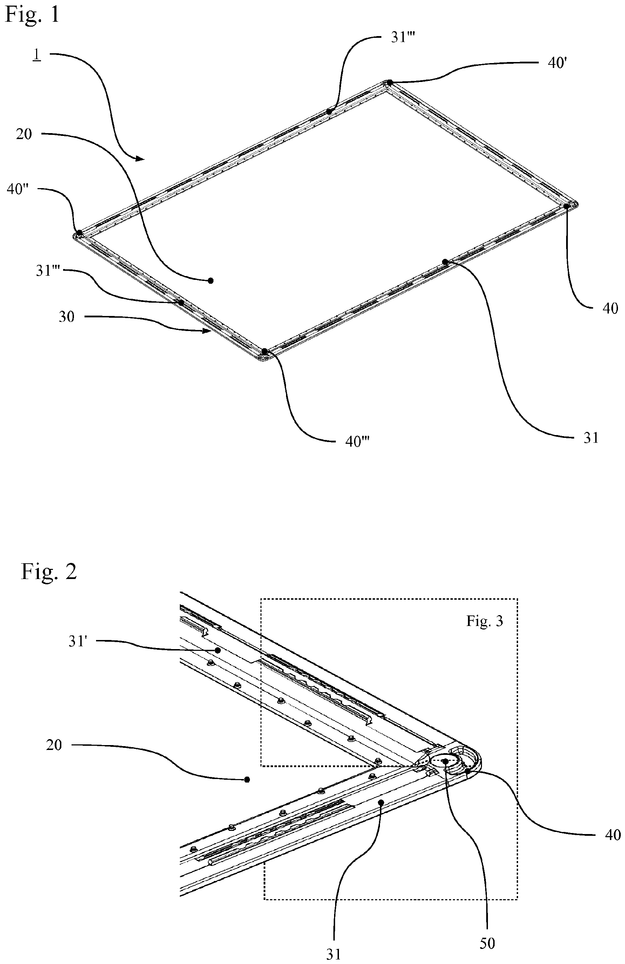

Fig. 1 zeigt eine erfindungsgemäße Frachtpalette bzw. Palette 1. Diese setzt sich im Wesentlichen aus einer Bodenplatte 20 und einem Rahmen 30 zusammen. Der Rahmen 30 besteht aus vier Eckprofilen 40, 40', 40", 40"', die mit Hohlprofilen 31, 31', 31", 31'" verbunden sind. Die Hohlprofile 31, 31', 31", 31'" und die Eckprofile 40, 40', 40", 40'" sind in entsprechender Weise ineinander gesteckt und durch Schraubverbindungen abgesichert.

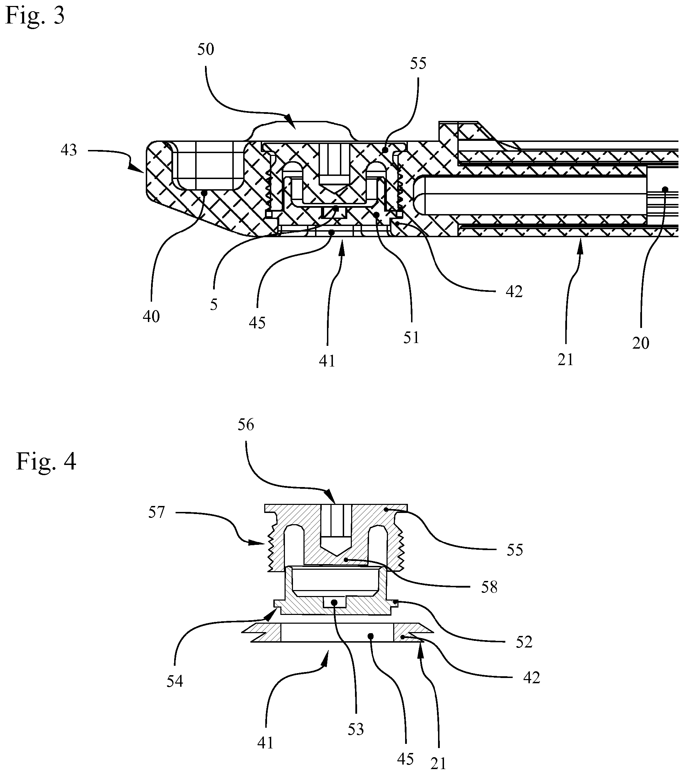

Jedes Eckprofil 40, 40', 40", 40'" der Palette 1 ist mit einem RFID-Transponder 5 (vgl. Fig. 3) ausgestattet. Hierfür ist an jedem Eckprofil 40, 40', 40", 40'" eine Transponder-Halteeinrichtung 50, 50', 50" vorgesehen. Die Fig. 2 zeigt eine Ansicht des ersten Eckprofils 40, das mit der Transponder-Halteeinrichtung 50 ausgestattet ist. Die Transponder-Halteeinrichtung 50 ist ein zylinderförmiger Körper, der in das Eckprofil 40 eingeschraubt ist.

Fig. 3 zeigt einen Schnitt durch dieses erste Eckprofil 40. Die Schnittebene verläuft im Wesentlichen senkrecht zu der Bodenplatte 20 und im 45-Grad-Winkel durch das Eckprofil 40. Der Schnitt gemäß Fig. 3 zeigt die in eine Bohrung 41 eingeschraubte Transponder-Halteeinrichtung 50. Die Bohrung 41 verläuft im Wesentlichen senkrecht zur Bodenunterseite 21 der Bodenplatte 20. Der Durchmesser der Bohrung 41 ist im unteren Abschnitt geringer, so dass sich die Anschläge 42 wechselseitig zu einer nach unten hin offenen Öffnung 45 ausbilden.

Die Transponder-Halteeinrichtung 50 ist zweiteilig ausgebildet. Wie in der Fig. 4 verdeutlicht, handelt es sich hierbei um zwei Hohlzylinder, die jeweils an einer Deckfläche geschlossen sind, wobei die Hohlzylinder derart ausgestaltet sind, dass sie sich ineinander stecken lassen, um einen geschlossenen Hohlkörper, nämlich die Transponder-Halteeinrichtung 50, auszubilden. Der obere Hohlzylinder wird nachfolgend als Gewindezylinder 55 und der untere als Halteeinrichtung-Bodenplatte 51 bezeichnet. Die Halteeinrichtung-Bodenplatte 51 hat im Schnitt im Wesentlichen eine U-Form, wobei dessen Schenkel in dem Gewindezylinder 55 hineinragen. Seitliche Überstände bilden einen Ring 52, der im eingesetzten Zustand auf dem Anschlag 42 des Eckprofils 40 liegt. Genauer gesagt liegt die nach unten ausgerichtete Anschlagfläche 54 des Rings 52 auf dem Anschlag 42 auf. Insofern nimmt die Halteeinrichtung-Bodenplatte 51 in der Bohrung 41 eine vordefinierte Position ein. Im Inneren hat die Halteeinrichtung-Bodenplatte 51 mittig eine rechteckige Aussparung zur Aufnahme des RFID-Transponders 5. Es handelt sich hierbei um eine Transponder-Aufnahme 53, die so an die RFID-Transponder-Abmessungen angepasst sein kann, dass ein Formschluss erzielt wird. Im eingesetzten Zustand der Transponder-Halteeinrichtung 50 verschließt ein Steg 58 die Transponder-Aufnahme 53 derart, dass der RFID-Transponder 5 sicher hierin gehalten wird.

Erfindungsgemäß wird die Halteeinrichtung-Bodenplatte 51 vor dem Einsetzen des Gewindezylinders 55 in der Bohrung 41 an dem Anschlag 42 positioniert. Danach lässt sich der Gewindezylinder 55 in die Bohrung 41 einschrauben. Der Gewindezylinder 55 fixiert im eingeschraubten Zustand gleichzeitig den RFID-Transponder 5 in der Transponder-Aufnahme 53 sowie die Halteeinrichtung-Bodenplatte 51 an dem Anschlag 42. Für das Einschrauben des Gewindezylinders 55 ist das Gewinde 57 vorgesehen.

Um das Einschrauben des Gewindezylinders 55 zu erleichtern, weist dieser an der der Halteeinrichtung-Bodenplatte 51 abgewandten Seite eine Werkzeugaufnahme 56 auf. In dem gezeigten Ausführungsbeispiel ist die Werkzeugaufnahme 56 als Innensechskant zur Aufnahme eines entsprechenden Inbusschlüssels ausgebildet. In einer Ausführungsform ist die Öffnung 45 als Innenachtkant ausgebildet, wobei der in die Öffnung 45 hineinragende Abschnitt der Halteeinrichtung-Bodenplatte 51 korrespondierend achteckig ausgebildet ist. Insofern gibt es innerhalb der Horizontalebene acht vordefinierte Positionen, die die Halteeinrichtung-Bodenplatte 51 einnehmen kann. Diese vordefinierten Positionen können genutzt werden, um den RFID-Transponder 5 in der Horizontalebene in geeigneter Weise, beispielsweise senkrecht zu der Bildebene der Fig. 3 auszurichten.

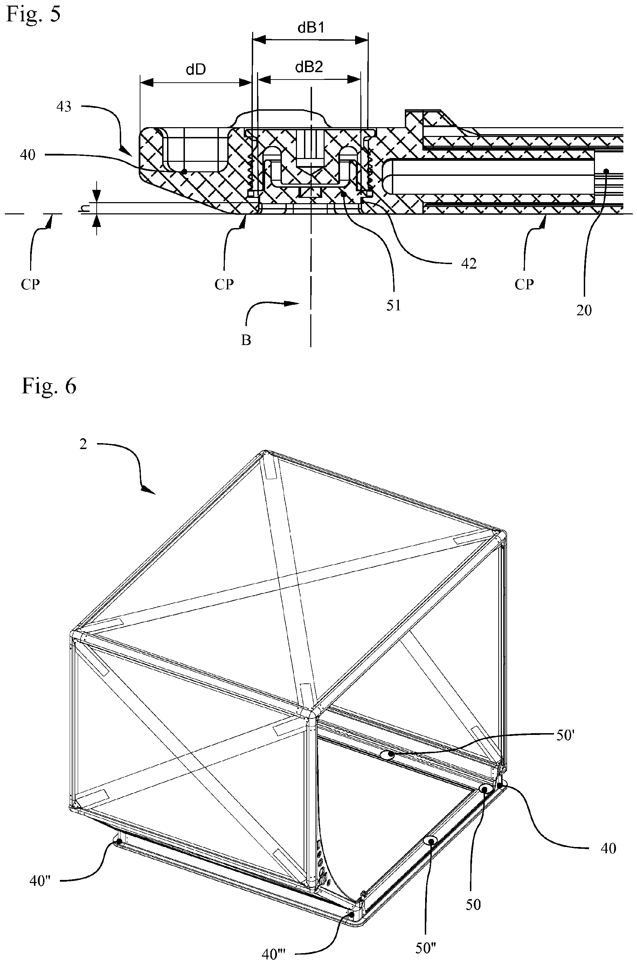

Fig. 5 zeigt den identischen Schnitt, wie die Fig. 3, wobei zusätzliche Bezugszeichen zur Verdeutlichung der Abmessungen und Positionierung der Transponder-Halteeinrichtung 50 vorgesehen sind. So erstreckt sich die Bohrung 41 wie bereits erläutert senkrecht zur Frachtbodenebene bzw. Transponderebene CP entlang der Bohrungsachse B. Die Bohrung 41 hat im oberen Bereich einen größeren Innendurchmesser (Gewindebohrungsdurchmesser dB1=ca. 3,5 cm) als im unteren Bereich, nämlich dem Bereich der Öffnung 45 (Öffnungsdurchmesser dB2=ca. 3 cm), so dass sich der Anschlag 42 ausbildet.

Der Anschlag 42 und die korrespondierend hierzu ausgebildete Halteeinrichtung-Bodenplatte 41 sorgen dafür, dass die Halteeinrichtung-Bodenplatte 41 von der Frachtbodenebene CP zurückgesetzt ist. Es ergibt sich eine Anordnungshöhe h von 3 mm.

Die Bohrung 41 hat einen Bohrungsabstand dD von ca. 3 cm zu dem Außenrand 43.

Fig. 6 zeigt eine Ausführungsform, bei der das erfindungsgemäße Bodenelement 10 in Verbindung mit einem Container 2 eingesetzt wird. Auch hier ist an dem Eckprofil 40 eine Transponder-Halteeinrichtung 50 mit einem entsprechenden RFID-Transponder 5 vorgesehen. Weitere Transponder-Halteeinrichtungen 50 können an den verbleibenden drei Ecken vorgesehen sein. Zusätzlich ist der Frachtcontainer 2 mit weiteren Transponder-Halteeinrichtungen 50', 50" ausgestattet, die mittig zwischen den Eckprofilen 40, 40', 40", 40'" vorgesehen sind.

Erfindungsgemäß sind zahlreiche weitere Ausführungsformen der Bodenelemente 10 denkbar. Beispielsweise können die Transponder-Halteeinrichtungen 50, 50', 50" entlang einer durch das Bodenelement 10 führenden Diagonale angeordnet sein. Es ist möglich, die Palette 1 und/oder den Container 2 mit 2, 4, 6 oder 8 erfindungsgemäßen Transponder-Halteeinrichtungen 50, 50', 50" oder einer ungeraden Anzahl dieser auszustatten. Ebenso kann eine Transponder-Halteeinrichtung 50, 50', 50" mit einem oder mehreren RFID-Transpondern 5 ausgestattet sein, die beispielsweise auf sich deutlich unterscheidenden Frequenzen arbeiten.

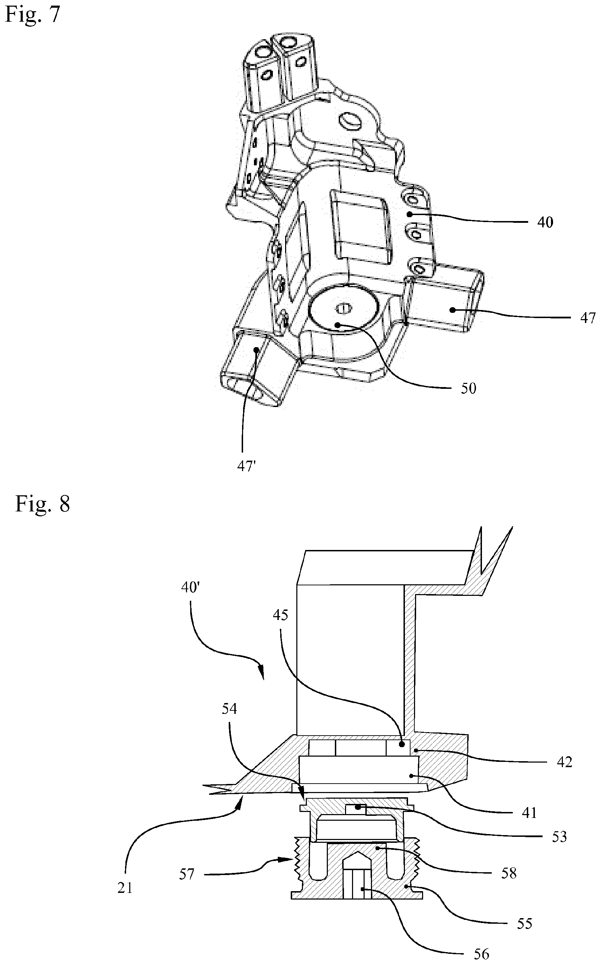

Eine bevorzugte Ausführungsform des Containers 2 ist die, bei der lediglich die Eckprofile 40 mit entsprechenden Transponder-Halteeinrichtungen 50 ausgestattet sind. Fig. 7 zeigt ein exemplarisch mit einer Transponder-Halteeinrichtung 50 ausgestattetes Eckprofil 40. Das Eckprofil 40 hat Verbindungszapfen 47, 47', die mit entsprechenden Hohlprofilen 31, 31', 31", 31'" verbindbar sind. Die Transponder-Halteeinrichtung 50 lässt sich ähnlich wie die Transponder-Halteeinrichtung 50 der Palette 1 von oben in das Eckprofil 40 einschrauben.

In einer weiteren erfindungsgemäßen Ausführungsform ist die Transponder-Halteeinrichtung 50 von unten in ein Eckprofil, beispielsweise das Eckprofil 40 des Containers 2 eingeschraubt. Eine entsprechende Ausführungsform zeigt die Fig. 8 schematisch. Die Öffnung 45 ist hier als Sechseck ausgebildet und nimmt die Halteeinrichtung-Bodenplatte 41 von unten her auf. Ebenso wie bei der Ausführungsform gemäß Fig. 4 ist ein Anschlag 42 für die Anschlagfläche 54 der Halteeinrichtung-Bodenplatte 51 vorgesehen. Auch der Gewindezylinder 55 lässt sich mittels des Gewindes 57 in die Bohrung 41 einschrauben, so dass sowohl der RFID-Transponder 5 wie auch die Halteeinrichtung-Bodenplatte 51 fixiert sind.

In den beschriebenen Ausführungsbeispielen sind die Transponder-Halteeinrichtungen 50, 50', 50" zweiteilige Hohlkörper. Erfindungsgemäß kann diese Anordnung durch weitere Bauelemente, beispielsweise Dichtungen, ergänzt werden.

Die Transponder-Halteeinrichtung 50, 50', 50" kann als Thermoplast, als Duroplast oder auch als Elastomer ausgeführt sein. In der vorliegenden Anmeldung wird der Begriff der Bohrung verwendet. Dies soll jedoch auf keinen Fall bedeuten, dass die entsprechende Aussparung zwangsläufig durch ein abrasives Verfahren hergestellt werden muss. Die erfindungsgemäße Bohrung 41 und die Öffnung 45 können auch in einem Gussverfahren oder anderen Verfahren hergestellt werden.

### Bezugszeichenliste

- 1: Palette
- 2: Container
- 5: RFID-Transponder
- 10: Bodenelement
- 20: Bodenplatte
- 21: Bodenunterseite
- 30: Rahmen
- 31, 31', 31", 31'": Hohlprofil
- 40, 40', 40", 40"': Eckprofil
- 41: Bohrung
- 42: Anschlag
- 43: Außenrand
- 45: Öffnung
- 47, 47': Verbindungszapfen
- 50, 50', 50": Transponder-Halteeinrichtung
- 51: Halteeinrichtung-Bodenplatte
- 52: Ring
- 53: Transponder-Aufnahme
- 54: Anschlagfläche
- 55: Gewindezylinder
- 56: Werkzeugaufnahme
- 57: Gewinde
- 58: Steg
- B: Bohrungsachse
- CP: Frachtbodenebene bzw. Transportebene ("conveyor plane")
- dB1: Gewindebohrungsdurchmesser
- dB2: Öffnungsdurchmesser
- dD: Bohrungsabstand
- h: Anordnungshöhe

## Patentansprüche

1. Bodenelement für einen Frachtcontainer (2) und/oder eine Frachtpalette (1), mit einer Bodenunterseite (21), umfassend:
- mindestens einen RFID-Transponder (5),
- mindestens eine Bohrung (41) mit einer Öffnung an der Bodenunterseite (21),
- eine Transponder-Halteeinrichtung (50, 50', 50") zur Halterung des RFID-Transponders (5), wobei die Transponder-Halteeinrichtung (50, 50', 50") in der Bohrung (41) befestigt ist, wobei die Transponder-Halteeinrichtung (50, 50', 50") als zweiteiliger Hohlkörper ausgebildet ist, wobei die Transponder-Halteeinrichtung (50, 50', 50") eine Halteeinrichtung-Bodenplatte (51) zur Halterung des RFID-Transponders (5) aus Kunststoff und einen Hohlzylinder (55) mit einem Gewinde umfasst, wobei die mindestens eine Bohrung (41) einen Anschlag (42) und ein Gewinde umfasst, wobei der in das Gewinde der Bohrung eingeschraubte Hohlzylinder (55) die Halteeinrichtung-Bodenplatte (51) derart auf dem Anschlag fixiert, dass der an der Halteeinrichtung-Bodenplatte (51) befestigte RFID-Transponder (5) von einer von der Bodenunterseite (21) aufgespannten Bodenunterseitenebene (CP) weniger als 30 Millimeter beabstandet ist.

2. Bodenelement nach Anspruch 1,
**dadurch gekennzeichnet, dass**
die Halteeinrichtung-Bodenplatte (51) eine vieleckige Grundform und/oder Rasten zur formschlüssigen Halterung in der Bohrung (41) umfasst.

3. Bodenelement nach einem der vorhergehenden Ansprüche,
**dadurch gekennzeichnet, dass**
der RFID-Transponder (5) für eine Kommunikation mit einer Leseantenne, die parallel zur Bodenunterseite (21) angeordnet ist, ausgerichtet ist.

4. Bodenelement nach einem der vorhergehenden Ansprüche,
**dadurch gekennzeichnet, dass**
die Transponder-Halteeinrichtung (50, 50', 50") von oben eingeschraubt ist.

5. Bodenelement nach einem der vorhergehenden Ansprüche,
**gekennzeichnet durch**
mindestens zwei Bohrungen (41), die an den Ecken des Bodenelements vorgesehen sind.

6. Bodenelement nach einem der vorhergehenden Ansprüche,
**dadurch gekennzeichnet, dass**
die Transponder-Halteeinrichtung (50, 50', 50") so auf dem Anschlag (42) aufliegt, dass die Halteeinrichtung-Bodenplatte (51) von der durch die Bodenunterseite (21) aufgespannten Bodenunterseitenebene (CP) deutlich, nämlich um mindestens 3 Millimeter, oder um mindestens 5 Millimeter beabstandet ist.

7. Bodenelement nach einem der vorhergehenden Ansprüche,
**dadurch gekennzeichnet, dass**
die Transponder-Halteeinrichtung (50, 50', 50") so auf dem Anschlag (42) aufliegt, dass der RFID-Transponder (5) von der von der Bodenunterseite (21) aufgespannten Bodenunterseitenebene (CP) weniger als 25 Millimeter beabstandet ist.

8. Bodenelement nach einem der vorhergehenden Ansprüche,
**dadurch gekennzeichnet, dass**
die mindestens eine Bohrung (41) mindestens 1 Zentimeter von einem Außenrand (43) des Bodenelements (10) beabstandet ist.

9. Bodenelement nach einem der vorhergehenden Ansprüche,
**dadurch gekennzeichnet, dass**
die Transponder-Halteeinrichtung (50, 50', 50") und/oder die mindestens eine Bohrung (41) einen Durchmesser von mindestens 2 Zentimetern oder von mindestens 3 Zentimetern hat.

10. Bodenelement nach einem der vorhergehenden Ansprüche,
**gekennzeichnet durch**
a. mindestens eine Bodenplatte (20);
b. einen Rahmen (30), wobei die mindestens eine Bohrung (41) in einem Eckprofil (40, 40', 40", 40"') des Rahmens (30) vorgesehen ist.

11. Bodenelement nach Anspruch 10,
**dadurch gekennzeichnet, dass**
der Rahmen (30) mindestens vier Hohlprofile (31, 31', 31", 31'") und mindestens vier Eckprofile (40, 40', 40", 40'") mit jeweils einer Bohrung zur Aufnahme einer Transponder-Halteeinrichtung (50, 50', 50") umfasst.

12. Verfahren zur Herstellung eines Bodenelements (10) für einen Frachtcontainer (2) oder eine Frachtpalette (1), mit einer Bodenunterseite (21), umfassend die Schritte:
a) Befestigen eines RFID-Transponders (5) an einer Halteeinrichtung-Bodenplatte (51) einer Transponder-Halteeinrichtung (50, 50', 50");
b) Einlegen der Halteeinrichtung-Bodenplatte (51) in eine Bohrung (41) eines Eckprofils (40, 40', 40", 40'") eines Rahmens des Bodenelements (10) mit einer Bodenplatte (20) derart, dass der an der Halteeinrichtung-Bodenplatte (51) gehalterter RFID-Transponder (5) von einer von der Bodenunterseite (21) aufgespannten Bodenunterseitenebene (CP) weniger als 30 Millimeter beabstandet ist;
c) Einschrauben eines Hohlzylinders (55) mit einem Gewinde in ein Gewinde der Bohrung (41) derart, dass die Halteeinrichtung-Bodenplatte (51) auf einem Anschlag (42) der Bohrung (41) des Eckprofils (40, 50', 40", 40"') fixiert ist.

13. Verfahren nach Anspruch 12,
**dadurch gekennzeichnet, dass**
das Einlegen der Halteeinrichtung-Bodenplatte (51) ein Ausrichten der Halteeinrichtung-Bodenplatte (51) in einem vieleckigen Aufnahmeprofil umfasst.

## Claims

1. A floor element for a cargo container (2) and/or a cargo pallet (1), having a floor underside (21), comprising:
- at least one RFID transponder (5),
- at least one bore (41) with an opening on the floor underside (21),
- a transponder holder device (50, 50', 50") for holding the RFID transponder (5), wherein the transponder holder device (50, 50', 50") is fixed in the bore (41),
wherein the transponder holder device (50, 50', 50") is formed as a two-piece hollow body, the transponder holder device (50, 50', 50") comprising a holder device base plate (51) made of plastic for holding the RFID transponder (5), and a hollow cylinder (55) having a thread, the at least one bore (41) comprising a shoulder (42) and a thread, the hollow cylinder (55), when screwed into the bore's thread, fixing the holder device base plate (51) on the shoulder in such a manner that the RFID transponder (5) attached to the holder device base plate (51) is spaced less than 30 millimeters from a floor underside plane (CP) spanned by the floor underside (21).

2. The floor element according to claim 1,
**characterized in that**
the holder device base plate (51) comprises a polygonal basic shape and/or catches for form-fit holding in the bore (41).

3. The floor element according to any one of the preceding claims,
**characterized in that**
the RFID transponder (5) is oriented for communication with a read antenna arranged in parallel to the floor underside (21).

4. The floor element according to any one of the preceding claims,
**characterized in that**
the transponder holder device (50, 50', 50") is screwed in from above.

5. The floor element according to any one of the preceding claims,
**characterized by**
at least two bores (41) which are provided at the corners of the floor element.

6. The floor element according to any one of the preceding claims,
**characterized in that**
the transponder holder device (50, 50', 50") rests upon the shoulder (42) such that the holder device base plate (51) is significantly spaced from the floor underside plane (CP) spanned by the floor underside (21), in particular spaced by at least 3 millimeters or by at least 5 millimeters.

7. The floor element according to any one of the preceding claims,
**characterized in that**
the transponder holder device (50, 50', 50") rests upon the shoulder (42) such that the RFID transponder (5) is spaced from the floor underside plane (CP) spanned by the floor underside (21) by less than 25 millimeters.

8. The floor element according to any one of the preceding claims,
**characterized in that**
the at least one bore (41) is spaced from an outer edge (43) of the floor element (10) by at least 1 centimeter.

9. The floor element according to any one of the preceding claims,
**characterized in that**
the transponder holder device (50, 50', 50") and/or the at least one bore (41) have a diameter of at least 2 centimeters or of at least 3 centimeters.

10. The floor element according to any one of the preceding claims,
**characterized by**
a. at least one floor plate (20);
b. a frame (30), wherein the at least one bore (41) is provided in a corner profile (40, 40', 40", 40"') of the frame (30).

11. The floor element according to claim 10,
**characterized in that**
the frame (30) comprises at least four hollow profiles (31, 31', 31", 31"') and at least four corner profiles (40, 40', 40", 40"'), each having a bore for receiving a transponder holder device (50, 50', 50").

12. A method for producing a floor element (10) for a cargo container (2) or a cargo pallet (1), having a floor underside (21), comprising the steps of:
a) fixing an RFID transponder (5) to a holder device base plate (51) of a transponder holder device (50, 50', 50");
b) inserting the holder device base plate (51) in a bore (41) of a corner profile (40, 40', 40", 40"') of a frame of the floor element (10) with a base plate (20) such that the RFID transponder (5) held on the holder device base plate (51) is spaced by less than 30 millimeters from a floor underside plane (CP) spanned by the floor underside (21);
c) screwing a hollow cylinder (55) having a thread in a thread of the bore (41) such that the holder device base plate (51) is fixed on a shoulder (42) of the bore (41) of the corner profile (40, 40', 40", 40"').

13. The method according to claim 12,
**characterized in that**
the inserting of the holder device base plate (51) comprises aligning the holder device base plate (51) in a polygonal receiving profile.

## Revendications

1. Élément de plancher pour un conteneur de fret (2) et/ou pour une palette de fret (1), avec une face inférieure de plancher (21) qui inclut :
- au moins un transpondeur RFID (5),
- au moins un perçage (41) avec une ouverture au niveau de la face inférieure de plancher (21),
- un moyen de maintien de transpondeur (50, 50', 50") pour le maintien du transpondeur RFID (5), ledit moyen de maintien de transpondeur (50, 50', 50") étant fixé dans le perçage,
dans lequel le moyen de maintien de transpondeur (50, 50', 50") est réalisé sous la forme d'un corps creux en deux pièces, tel que le moyen de maintien de transpondeur (50, 50', 50") inclut une plaque de plancher de moyen de maintien (51) pour maintenir le transpondeur RFID (5) en matière plastique, et un cylindre creux (55) avec un pas de vis, dans lequel ledit au moins un perçage (41) inclut une butée (42) et un pas de vis, de sorte que le cylindre creux (55) vissé dans le pas de vis du perçage fixe la plaque de plancher de moyen de maintien (51) sur la butée de telle façon que le transpondeur RFID (5) fixé sur la plaque de plancher de moyen de maintien (51) est écarté de moins de 30 mm d'un plan de face inférieure (CP) défini par la face inférieure du plancher (21).

2. Élément de plancher selon la revendication 1,
**caractérisé en ce que** la plaque de plancher du moyen de maintien (51) présente une forme de base polygonale et/ou des crans pour le maintien en coopération de formes dans le perçage (41).

3. Élément de plancher selon l'une des revendications précédentes,
**caractérisé en ce que** le transpondeur RFID (5) est conçu pour une communication avec une antenne de lecture qui est agencée parallèlement à la face inférieure du plancher (21).

4. Élément de plancher selon l'une des revendications précédentes,
**caractérisé en ce que** le moyen de maintien de transpondeur (50, 50', 50") est vissé depuis le haut.

5. Élément de plancher selon l'une des revendications précédentes,
**caractérisé par** au moins deux perçages (41) qui sont prévus au niveau des coins de l'élément de plancher.

6. Élément de plancher selon l'une des revendications précédentes,
**caractérisé en ce que** le moyen de maintien pour transpondeur (50, 50', 50") s'applique sur la butée (42) de telle façon que la plaque de plancher du moyen de maintien (5) est nettement écartée du plan (CP) défini par la face inférieure du plancher (21), à savoir d'au moins 3 mm ou d'au moins 5 mm.

7. Élément de plancher selon l'une des revendications précédentes,
**caractérisé en ce que** le moyen de maintien de transpondeur (50, 50', 50") s'applique sur la butée (42) de telle façon que le transpondeur RFID (5) est écarté de moins de 25 mm depuis le plan de face inférieure (CP) défini par la face inférieure du plancher (21).

8. Élément de plancher selon l'une des revendications précédentes,
**caractérisé en ce que** ledit au moins un perçage (41) est écarté d'au moins 1 cm depuis une bordure extérieure (43) de l'élément de plancher (10).

9. Élément de plancher selon l'une des revendications précédentes,
**caractérisé en ce que** le moyen de maintien de transpondeur (50, 50', 50") et/ou ledit au moins un perçage (41) a un diamètre d'au moins 2 cm ou d'au moins 3 cm.

10. Élément de plancher selon l'une des revendications précédentes,
**caractérisé par**
a) au moins une plaque de plancher (20) ;
b) un cadre (30), et ledit au moins un perçage (41) est prévu dans un profilé de coin (40, 40', 40", 40"') du cadre (30).

11. Élément de plancher selon la revendication 10,
**caractérisé en ce que** le cadre (30) inclut au moins quatre profilés creux (31, 31', 31", 31'") et au moins quatre profilés de coin (40, 40', 40", 40"') ayant chacun un perçage pour la réception d'un moyen de maintien de transpondeur (50, 50', 50").

12. Procédé pour la fabrication d'un élément de plancher (10) pour un conteneur de fret (2) ou pour une palette de fret (1) comportant une face inférieure de plancher (21), incluant les étapes consistant à :
a) fixer un transpondeur RFID (5) sur une plaque de plancher de moyen de maintien (51) d'un moyen de maintien de transpondeur (50, 50', 50") ;
b) introduire la plaque de plancher de moyen de maintien (51) dans un perçage (41) d'un profilé de coin (40, 40', 40", 40"') d'un cadre de l'élément de plancher (10) avec une plaque de plancher (20) de telle façon que le transpondeur RFID (5) maintenu sur la plaque de plancher du moyen de maintien (51) est écarté de moins de 30 mm depuis un plan de face inférieure (CP) défini par la face inférieure de plancher (21) ;
c) visser un cylindre creux (55) avec un pas de vis dans un pas de vis du perçage (41) de telle façon que la plaque de plancher du moyen de maintien (51) est fixée sur une butée (42) du profilé de coin (40, 40', 40", 40"').

13. Procédé selon la revendication 12,
**caractérisé en ce que** l'introduction de la plaque de plancher du moyen de maintien (51) inclut d'orienter la plaque de plancher du moyen de maintien (51) dans un profil de réception polygonal.
